# EUROPÄISCHE PATENTANMELDUNG

(11) **EP 0 879 842 A2**
(43) Veröffentlichungstag der Anmeldung: **25.11.1998**
(21) Anmeldenummer: 98108964.2
(22) Anmeldetag: 16.05.1998
(51) Int. Cl.: C08J 3/03, C08L 83/08

(54) **Aminosiliconöl-Microemulsionen**

(30) Priorität: 23.05.1997 DE 19721699
(71) Anmelder: Hüls Silicone Gesellschaft mit beschränkter Haftung, D-01610 Nünchritz (DE)
(72) Erfinder: Rautschek, Holger, Dr. rer. nat., 01612 Nünchritz (DE); Otto, Reiner, 01612 Nünchritz (DE)
(74) Vertreter: Zöllner, Gudrun

(57) **Zusammenfassung**

Die Erfindung betrifft Aminosiliconöl-Microemulsionen, welche neben anderen Bestandteilen einen Ethylenoxid-Propylenoxid-Emulgator enthalten.

## Beschreibung

Die Erfindung betrifft Aminosiliconöl-Microemulsionen, welche neben anderen Bestandteilen einen Ethylenoxid-Propylenoxid-Emulgator enthalten.

Wässrige, siliziumorganische Verbindungen enthaltende Zusammensetzungen sind bekannt (W.Noll Chemie und Technologie der Silicone 1967). Diese Produkte zeichnen sich durch ihre Wasserverdünnbarkeit aus und ermöglichen die einfache Anwendung auch hochviskoser siliziumorganischer Verbindungen, der Polyorganosiloxane, ohne dass Lösemittel verwendet werden müssen. Diese auch als Siliconemulsionen bezeichneten wässrigen Formulierungen finden ihre Anwendung z.B. als Trennmittel, Gleitmittel und zur Textilausrüstung. Insbesondere bei der Anwendung im Textilbereich wird eine besonders kleine Partikelgröße und Stabilität gefordert, um z.B. unerwünschte Fleckenbildung zu vermeiden.

Es wurde gefunden, daß man auf der Basis von Polyorganosiloxanen, welche polare Gruppen tragen, besonders feinteilige wässrige Zusammensetzungen, sogenannte Microemulsionen, herstellen kann. Dabei werden siliziumorganische Verbindung, Emulgator, der in der siliziumorganischen Verbindung unlöslich ist, und Wasser zu einem Konzentrat verarbeitet und dieses Konzentrat schnell verdünnt (EP 138192). Durch Zusatz von Essigsäure zum Produkt ist bei Verwendung von siliziumorganischen Verbindungen, welche im Molekül basischen Stickstoff enthalten, eine zusätzliche Stabilisierung erreichbar (EP 342834). Eine weitere Erhöhung der Stabilität kann dadurch erreicht werden, daß man den Prozess der Herstellung der Siliconmicroemulsion bei Temperaturen oberhalb 50°C durchführt (EP 358652). Dadurch, daß man die basischen Stickstoffgruppen der siliziumorganischen Verbindungen vor dem Mischen mit dem Emulgator mit z.B. Essigsäure in die Salzform überführt, erreicht man von Anfang an eine klare Mischung und erhält auch ohne Erwärmen eine klare stabile Microemulsion (EP 442098). Als siliziumfreie nichtionogene Emulgatoren werden dabei ausschließlich Produkte auf der Basis von Polyethylenglycolethern und -estern oder Alkylpolyclycoside verwendet.

Weitere Varianten der Herstellung dieser Produkte bestehen in der Verwendung von amphoteren Tensiden (EP 417047, EP 417559). Nachteilig an dieser Verfahrensweise ist, daß die Stabilität dieser Emulsionen sehr stark von einem optimalen pH-Wert abhängig ist und diese in Kombinationen mit elektrolythaltigen Komponenten bei der Anwendung zusätzliche Stabilitätsprobleme erwarten lassen.

Die mit den bekannten Emulgatoren hergestellten Emulsionen sind noch nicht in jeder Hinsicht zufriedenstellend. Gemäß DD 298 651 enthalten Diorganopolysiloxan-Emulsionen zur Erhöhung der Lagerstabilitat 0,3 bis 8 Gew.-% eines nichtionogenen Emulgators auf der Basis von Ethylenglycol/Propylenglycolethern von C₆- bis C₉-Alkoholen. Ein weiterer Zusatz von Emulgatoren oder Zusätzen ist nicht beschrieben. Die Stabilität der erhaltenen Emulsionen ist nicht zufriedenstellend. Gemäß der Beispiele werden bei einem vergleichsweise milden Zentrifugentest über 10 min bei 3000 min⁻¹ bereits Spuren von Wasser abgeschieden. Der Fachmann erkennt daraus, dass hierbei keine Microemulsionen vorliegen können. Charakteristisch für stabile Aminosiliconöl-Microemulsionen ist, dass auch nach einem Zentrifugentest über 60 min bei 4000 min^{-¹} deren Stabilität erhalten bleibt.

Neben der Stabilität von Aminosiliconöl-Microemulsionen ist es insbesondere die Vergilbungsneigung bei der Lagerung oder der Verwendung dieser Emulsionen, die weiterhin verbesserungsbedürtig ist.

Es ist die Aufgabe der vorliegenden Erfindung, Aminosiliconöl-Microemulsionenen bereitzustellen, welche stabil sind und eine geringe Tendenz zur Vergilbung aufweisen.

Gegenstand der Erfindung sind Aminosiliconöl-Microemulsionen, welche
(A) 1 bis 30 Gew.%, vorzugsweise 10 bis 25 Gew.-%, mindestens einer siliziumorganischen Verbindung der allgemeinen Formel (I)

   RₐR¹_{b}(R²O)_{c}SiO_{(4-a-b-c) 2} (I),

   worin R gleiche oder verschiedene aliphatische Kohlenwasserstoffreste mit 1 bis 20 Kohlenstoffatomen oder Phenyl bedeuten, mit der Maßgabe, dass maximal 50% der Reste Phenyl sind, R¹ gleiche oder verschiedene Reste mit 3 bis 20 Kohlenstoffatomen mit mindestens einem basischen Stickstoffatom darstellen und R² Wasserstoff oder einen aliphatischen Kohlenwasserstoffrest mit 1 bis 4 Kohlenstoffatomen bedeutet, wobei die Summe (a+b+c) einen Wert von 1,7 bis 2,3 annimmt, b einen Wert hat, so dass 0,05 bis 1,0 Milliequivalent basischer Stickstoff je g der Verbindung (I) enthalten ist, und c zwischen 0 und 0,3 liegt,
(B) 50 bis 98 Gew.%, vorzugsweise 60 bis 85 Gew.-%, Wasser,
(C) 0,01 bis 3 Gew.%, vorzugsweise 0,05 bis 2 Gew.-%, einer organischen und/oder anorganischen Säure,
(D) bis zu 10 Gew.%, vorzugsweise 1 bis 5 Gew.-%, einer niedermolekularen polaren aliphatischen organischen Verbindung sowie
(E) 1 bis 20 Gew.%, vorzugsweise 5 bis 15 Gew.-%, eines oder mehrerer Emulgatoren, wobei mindestens eine Verbindung der allgemeinen Formel (II)

   R³(OCH₂CH₂)ₙ(OC₃H₆)ₘOH (II)

   enthalten ist, wobei R³ ein substituierter oder unsubstituierter Kohlenwasserstoffrest mit 3 bis 30 Kohlenstoffatomen, vorzugsweise ein verzweigter aliphatischer Kohlenwasserstoffrest mit durchschnittlich mehr als 9 Kohlenstoffatomen, bedeutet sowie n und m Werte zwischen 1 und 20 annehmen, und die Verbindung der allgemeinen Formel (II) vorzugsweise mit mindestens 10 Gew-%, bezogen auf die Gesamtkomponente (E), enthalten ist.

Die erfindungsgemäßen Microemulsionen enthalten als Komponente (A) siliziumorganische Verbindungen der allgemeinen Formel (I) vorzugsweise solche mit einer Viskosität von 100 bis 50000 mm²/s, wobei als Reste R Methylgruppen bevorzugt sind. R kann jedoch auch jeder andere bekannte Kohlenwasserstoffrest sein. Das schließt u.a. folgende Reste ein: n-Alkylreste mit 2 bis 20 Kohlenstoffatomen, wie z. B. Ethyl, Hexyl, Cyclohexyl; iso-Alkylreste mit 3 bis 20 Kohlenstoffatomen, wie Isopropyl und Isoamyl; Alkylreste mit tertiären Kohlenstoffatomen, wie tert-Butyl und tert-Pentyl; aromatische Kohlenwasserstoffreste, wie z. B. Phenyl, Naphthyl, Anthryl; Alkylarylreste, bei denen das Silizium entweder an einen aromatischen Kohlenstoff wie z. B. bei Tolylresten, oder an einen aliphatischen Kohlenstoff, wie z. B. bei Benzylresten, gebunden ist; Reste mit olefinischen Doppelbindungen. wie z. B. Vinyl, Allyl und Norbornyl, sowie substituierte Kohlenwasserstoffreste, wie z. B. Trifluor-propyl, Cyanoethyl, Alkoxyaryl, Alkoxyalkyl und Halogenaryl.

Die Reste R¹ entsprechen vorzugsweise der allgemeinen Formel (IV)

-Q-(NR⁵Q^{¹})_{d}NR⁵₂ (IV).

In Formel (IV) bedeutet Q einen zweiwertigen Kohlenwasserstoffrest mit mindestens 3 Kohlenstoffatomen, Q¹ einen zweiwertigen Kohlenwasserstoffrest mit 2 bis 10 Kohlenstoffatomen und R⁵ gleiche oder verschiedene Reste, ausgewählt aus Wasserstoff, C₁-C₁₀-Alkyl oder Cycloalkyl. Dabei nimmt d vorzugsweise Werte von 0 bis 3 an. Zwei Reste R⁵ können auch einen Ring bilden, z. B. wenn der Rest der Formel (III) einem Piperazyl-N-propylrest oder einem Piperidinyl-N-propyl entspricht Beispiele für bevorzugte Reste R¹ sind Aminopropyl, Aminoethylaminopropyl, Cyclohexylaminopropyl, Dimethylaminoethylaminopropyl und n-Butylaminoethylaminopropyl. Der Amingehalt der siliziumorganischen Verbindung beträgt 0,05 bis 1,0 Millequivalent pro g (meq/g), d. h., dass bei der Säure/Basen-Titration 1g der Verbindung der allgemeinen Formel (I) 0,05 bis 1 ml 1-molare Salzsäure verbraucht. Vorzugsweise beträgt der Amingehalt 0,2 bis 0,5 meq/g. Die Amingruppen in den Resten der allgemeinen Formel (IV) können auch ganz oder teilweise als Amid- oder Imidgruppen vorliegen, z. B. nachdem aminische Reste mit Acetanhydrit umgesetzt wurden.

Bevorzugte Reste R² sind Wasserstoff, Methyl und Ethyl.

Die Summe aus a, b und c in der allgemeinen Formel (I) betragt vorzugsweise 1,9 bis 2,1. Der Wert von c bestimmt den Gehalt an reaktiven Hydroxy- und/oder Alkoxygruppen in der Verbindung (I) und liegt vorzugsweise zwischen 0 und 0,1.

Die erfindungsgemäßen Aminosiliconöl-Microemulsionen enthalten als weitere Komponente (C) eine Säure, die vorzugsweise einen pH-Wert kleiner als 6 gewährleistet. Beispiele sind Salzsäure, Schwefelsäure, Trifluormethansulfonsäure, p-Toluolsulfonsäure, Milchsäure, Bernsteinsäure, Chloressigsäure, Trifluoressigsäure und Ameisensäure. Auch Aminosäuren können zur Einstellung des pH-Wertes eingesetzt werden. Besonders bevorzugt ist die Verwendung von Essigsäure.

Als weitere Komponenten (D) können niedermolekulare polare organische Verbindungen enthalten sein. Beispiele für derartige Verbindungen sind aliphatische oder aromatische Verbindungen mit mindestens einer aliphatischen Hydroxylgruppe und weniger als 10 Kohlstoffatomen wie Ethylenglycol, Propylenglycol, Ethylenglycolmonophenylether, Diethylenglycol, Diethylenglycolmonobutylether. Bevorzugt sind aliphatische organische Verbindungen mit mindestens 3 Hydroxylgruppen und einem Schmelzpunkt größer 25°C, die der allgemeinen Formel (III)

(HOCH₂)₃CR⁴ (III),

entsprechen, wobei R⁴ C₁- bisC₄ Alkyl oder CH₂OH bedeutet, entsprechen. Besonders bevorzugt sind Pentaerythrit, Trishydroxymethylethan und Trishydroxymethylpropan.

Als Komponente (E) enthalten die erfindungsgemäßen Microemulsionen Emulgatoren, wobei wesentlich für die Erfindung die Verwendung mindestens eines nichtionogenen Emulgators der allgemeinen Formel (II) R³(OCH₂CH₂)ₙ(OC₃H₆)ₘOH ist. Bevorzugt sind 10 bis 70% Gew.-% der insgesamt verwendeten Emulgatormenge Verbindungen der allgemeinen Formel (II). Verbindungen dieser Art sind bekannt, sie werden durch Ethoxylierungen und Propoxylierungen aliphatischer Alkohole hergestellt. Als aliphatische Alkohole, die den Rest R³ bestimmen, können synthetische und/oder natürliche Alkohole mit 3 bis 30 Kohlenstoffatomen eingesetzt werden. Vorzugsweise werden jedoch Verbindungen der allgemeinen Formel (II) eingesetzt, die aus Alkoholen mit 8 bis 18 Kohlenstoffatomen hergestellt wurden, wobei Verbindungen auf der Basis von synthetischen verzweigten Alkoholen aus der Oxosynthese mit durchschnittlich mehr als 9 Kohlenstoffatomen besonders bevorzugt sind. Die Werte für m und n liegen zwischen 1 und 20, vorzugsweise zwischen 2 und 10. Neben der Verbindung der allgemeinen Formel (II) können weitere bekannte kationische und/oder nichtionogene Emulgatoren enthalten sein. Beispiele dafür sind: Polyethylenglycolether und -ester von natürlichen und/oder synthetischen aliphatischen Alkoholen, Alkylphenolen, Carbonsäuren und natürlichen Fetten, wie Rizinusöl, sowie mit Polyethylenglycol und/oder Polypropylenglycol substituierte Siloxane. Auch Alkylpolyglycoside sind als Emulgatoren einsetzbar. Besonders bevorzugte Emulgatoren in Kombination mit den Verbindungen der allgemeinen Formel (II) sind Polyethylenglycolether von synthetischen verzweigten Alkoholen mit 9 bis 15 Kohlenstoffatomen, wie z. B. Ethoxylate von Isotridecylalkohol oder Trimethylnonanol. Als kationische Emulgatoren können z. B. Trimethylbenzylammoniumchlorid, quarternisierte Kokosfettaminethoxylate, Fettsäureamidtrialkylammoniumchloride und weitere bekannte Emulgatoren eingesetzt werden.

Die Herstellung der erfindungsgemäßen Aminosiliconöl-Microemulsion erfolgt durch Vermischen aller Komponenten, wobei die Reihenfolge, die Temperatur und die Art der Vermischung im allgemeinen nicht kritisch ist. Es ist jedoch bevorzugt, dass zuerst die Komponenten (A), (D) und (E) miteinander homogen vermischt werden, dann Komponente (B) kontinuierlich zudosiert wird und Komponente (C) entweder während der Dosierung von (B) oder zum Schluss zugesetzt wird. Die Homogenisierung der Mischung kann beispielsweise während des gesamten oder eines Teils des Mischprozesses mittels Rotor-Stator-Homogenisatoren bei einer Umfangsgeschwindigkeit von min-destens 5 m/s erfolgen. Bei der Herstellung betragt die Temperatur vorzugsweise weniger als 35°C.

Die erfindungsgemäßen Zusammensetzungen können als weiterhin bekannte Zusatzstoffe, wie Katalysatoren, Silanvernetzer, Cellulosevernetzer, kationische oder anionische Tenside (z.B. als Netzmittel), Biocide und Farbstoffe, enthalten.

Gegenüber herkömmlichen Microemulsionen weisen die erfindungsgemäßen eine verbesserte Stabilität und eine geringere Vergilbungsneigung auf Insbesondere war es überraschend, dass signifikante Anteile von Emulgatoren auf Kohlenwasserstoffbasis, welche neben Polyethylenglycolgruppen auch Polypropylengruppen enthalten, die Stabilität der Emulsionen deutlich verbessern.

Die Anwendung der erfindungsgemäßen Aminosiliconöl-Microemulsion erfolgt bevorzugt in der Textilindustrie, beispielsweise als Weichgriffmittel auf Baumwolle, Baumwoll-Polyester-Mischgeweben, Polyamiden. Dabei können sowohl gewebte als auch vliesartige Materialien ausgerüstet werden. Eine weitere Anwendung ist z.B. die Antifilzausrüstung von Wolle. Weitere Einsatzgebiete der Microemulsion sind die Herstellung von Polituren oder die Kosmetikindustrie, z.B. in Haarpflegemitteln.

### Ausführungsbeispiele

### Beispiel 1

18 Teile eines trimethylsiloxyterminierten Polydimethylsiloxans mit seitenständigen Aminoethylaminopropylgruppen einer Viskosität von 800 mm²/s und einem Amingehalt von 0,3 meq/g wurden mit 5 Teilen eines C₁₁-Oxoalkohols mit 6 bis 7 Ethylenoxideinheiten und 5 Teilen eines C₉₋₁₁-Oxoalko-hols mit 5 Ethylenoxideinheiten und 5 Propylenoxideinheiten und 3 Teilen Propylenglycol vermischt. 69 Teile Wasser wurden innerhalb von 5 min kontinuierlich zudosiert. Die Temperatur während des Mischprozesses betrug ca 30°C. Abschließend wurden 0,5 Teile Eisessig zugegeben.

### Beispiel 2

18 Teile eines trimethylsiloxyterminierten Polydimethylsiloxans mit seitenständigen Aminoethylaminopropylgruppen, einer Viskosität von 4200 mm²/s und einem Amingehalt von 0,3 meq/g wurden mit 10 Teilen eines C₉₋₁₁-Oxoalkohols mit 3 Ethylenoxideinheiten und 2 Propylenoxideinheiten und 3 Teilen Propylenglycol vermischt. 69 Teile Wasser wurden innerhalb von 8 min kontinuierlich zudosiert. Abschließend wurden 0,5 Teile Eisessig zugegeben.

### Beispiel 3

18 Teile eines trimethylsiloxyterminierten Polydimethylsiloxans mit seitenständigen N-Butylamino-ethylaminopropylgruppen, einer Viskosität von 5000 mm²/s und einem Amingehalt von 0,3 meq/g wurden mit 5 Teilen eines C₁₃-Oxoalkohols mit 4 Ethylenoxideinheiten und 5 Teilen eines C₉₋₁₁-Oxoalkohols mit 5 Ethylenoxideinheiten und 5 Propylenoxideinheiten und 3 Teilen Trishydrorymethylethan vermischt. Die Mischung wurde mit einem "Ultra-Turrax" bei einer Umfangsgeschwindigkeit des Homogenisierwerkzeuges von 8 m/s 2 Minuten homogenisiert. Dann wurden 0,5 Teile Eisessig zugegeben und weiter 3 min homogenisiert. Abschließend wurden 69 Teile Wasser innerhalb von 5 min kontinuierlich zudosiert.
Die Teilchengröße des Produktes wurde mit einem Microtrac Ultrafine Particle Analyser der Fa. Leeds & Northrup bestimmt. Der Mittelwert der Volumenverteilung lag bei 0,0082 µm.

### Beispiel 4

18 Teile eines trimethylsiloxyterminierten Polydimethylsiloxans mit seitenständigen Aminoethylaminopropylgruppen, einer Viskosität von 3000 mm²/s und einem Amingehalt von 0,25 meq/g wurden mit 10 Teilen eines eines Gemisches aus 5 Teilen eines C₁₃-Oxoalkohols mit 7 Ethylenoxideinheiten und 5 Teilen eines C₉₋₁₁-Oxoalkohols mit 3 Ethylenoxideinheiten und 2 Propylenoxideinheiten, 20 Teilen Wasser und 3 Teilen Tristrimethylolpropan vermischt. 49 Teile Wasser wurden innerhalb von 5 min kontinuierlich zudosiert. Abschließend wurden 0,4 Teile Eisessig zugegeben.

### Beispiel 5

20 Teile eines trimethylsiloxyterminierten Polydimethylsiloxans mit Aminoethylaminopropylgruppen, einer Viskosität von 6000 mm²/s und einem Amingehalt von 0,4 meq/g wurden mit 3,5 Teilen eines C₁₃-Oxoalkohols mit 7 Ethylenoxideinheiten und 6,5 Teilen eines C₉₋₁₁-Oxoalkohols mit 5 Ethylenoxideinheiten und 5 Propylenoxideinheiten vermischt. 69 Teile Wasser wurden innerhalb von 5 min kontinuierlich zudosiert. Abschließend wurden 0,6 Teile Eisessig zugegeben.

### Beispiel 6

20 Teile eines methoxydimethylsiloxyterminierten Polydimethylsiloxans mit Aminoethylaminopropylgruppen, einer Viskosität von 150 mm²/s und einem Amingehalt von 0,4 meq/g wurden mit 5 Teilen eines C₁₃-Oxoalkohols mit 7 Ethylenoxideinheiten und 5 Teilen eines C₉₋₁₁-Oxoalkohols mit 3 Ethylenoxideinheiten und 3 Propylenoxideinheiten vermischt. 69 Teile Wasser wurden innerhalb von 5 min kontinuierlich zudosiert. Abschließend wurden 0,6 Teile Eisessig zugegeben.

### Ergebnisse:

Alle Produkte waren sofort nach der Herstellung farblos.
Die Ergebnisse der Prufüngen sind in Tabelle 1 zusammengefaßt

Die Emulsionen wurden nach folgenden Kriterien geprüft:
- Aussehen sofort nach der Herstellung (A [sofort])
- Lichtdurchlässigkeit in 1 cm Küvette bei 580 nm (T [%])
- Aussehen nach 30 d bei 50°C (A [50°C])
- Aussehen nach 9 Monaten Lagerung bei Raumtemperatur (A [270 d])

**Tabelle 1**

| Beispiel Nr. | A [sofort] | T [%] | A [50°C] | A [270 d] |
|---|---|---|---|---|
| 1 | transluzent | 4,7 | transluzent, farblos | transluzent, farblos |
| 2 | transluzent | 5,4 | transluzent, farblos | transluzent, farblos |
| 3 | klar | 96 | klar, farblos | klar, farblos |
| 4 | transluzent | 89 | transluzent, farblos | transluzent, farblos |
| 5 | klar | 94 | klar, farblos | klar, farblos |
| 6 | transluzent | 73 | transluzent, schwach gelblich | transluzent, schwach gelblich |

Beim Zentrifugentest (60 min bei 4000 min⁻¹, was 2500 g entspricht) wurden bei den gemäß der Beispiele erhaltenen Produkte keinerlei Abscheidungen festgestellt.

Die erfindungsgemäßen Formulierungen wurden in bekannter Weise als Weichgriffmittel eingesetzt und verliehen den imprägnierten Geweben den gewünschten weichen Griff ohne dass eine Vergilbung festgestellt wurde.

## Patentansprüche

1. Aminosiliconöl-Microemulsionen, enthaltend
(A) 1 bis 30 Gew.% mindestens einer siliziumorganischen Verbindung der allgemeinen Formel (I)
RₐR¹_{b}(R²O)_{c}SiO_{(4-a-b-c)2} (I),
worin R gleiche oder verschiedene aliphatische Kohlenwasserstoffreste mit 1 bis 20 Kohlenstoffatomen oder Phenyl bedeuten, mit der Maßgabe, dass maximal 50% der Reste Phenyl sind, R¹ gleiche oder verschiedene Reste mit 3 bis 20 Kohlenstoffatomen mit mindestens einem basischen Stickstoffatom darstellen und R² Wasserstoff oder einen aliphatischen Kohlenwasserstoffrest mit 1 bis 4 Kohlenstoffatomen bedeutet, wobei die Summe (a+b+c) einen Wert von 1,7 bis 2,3 annimmt, b einen Wert hat, so dass 0,05 bis 1,0 Milliequivalent basischer Stickstoff je g der Verbindung (I) enthalten ist, und c zwischen 0 und 0,3 liegt,
(B) 50 bis 98 Gew.% Wasser,
(C) 0,01 bis 3 Gew.% einer organischen und/oder anorganischen Säure,
(D) bis zu 10 Gew.% einer niedermolekularen polaren aliphatischen organischen Verbindung sowie
(E) 1 bis 20 Gew.% eines oder mehrerer Emulgatoren, wobei mindestens eine Verbindung der allgemeinen Formel (II)
R³(OCH₂CH₂)ₙ(OC₃H₆)ₘOH (II)
enthalten ist, worin R³ ein substituierter oder unsubstituierter Kohlenwasserstoffrest mit 3 bis 30 Kohlenstoffatomen darstellt sowie n und m Werte zwischen 1 und 20 annehmen.

2. Aminosiliconöl-Microemulsionen nach Anspruch 1, dadurch gekennzeichnet, dass die Verbindung der allgemeinen Formel (II) mit mindestens 10 Gew-%, bezogen auf die Gesamtkomponente (E), enthalten ist.

3. Aminosiliconöl-Microemulsionen nach Anspruch 1, dadurch gekennzeichnet, dass in der allgemeinen Formel (II) R³ ein verzweigter aliphatischer Kohlenwasserstoffrest mit durchschnittlich mehr als 9 Kohlenstoffatomen bedeutet.

4. Aminosiliconöl-Microemulsionen nach Anspruch 1, dadurch gekennzeichnet, dass als Komponente (E) eine aliphatische organische Verbindung der allgemeinen Formel (II)
(HOCH₂)₃CR⁴ (II),
wobei R⁴ C₁- bis C₄-Alkyl oder -CH₂OH bedeutet, verwendet wird

5. Aminosiliconöl-Microemulsionen nach Anspruch 1, dadurch gekennzeichnet, dass die siliziumorganische Verbindung der allgemeinen Formel (I) durch eine Viskosität von 100 bis 50.000 mm²/s und einen Gehalt von 0,2 bis 0,5 Milliequivalent an basischem Stickstoff je g der Verbindung (I) charakterisiert ist.
